# EUROPEAN PATENT APPLICATION

(11) **EP 4 598 222 A1**
(43) Date of publication of application: **06.08.2025**
(21) Application number: 23873003.0
(22) Date of filing: 25.09.2023
(51) Int. Cl.: H04W 72/231, H04W 72/04, H04W 72/12, H04L 1/08, H04L 5/00, H04L 5/14

(54) **COVERAGE ENHANCEMENT METHOD AND DEVICE IN FULL-DUPLEX COMMUNICATION SYSTEM**

(30) Priority: 28.09.2022 KR 20220123681; 18.08.2023 KR 20230108507
(71) Applicant: Electronics and Telecommunications Research Institute, Daejeon 34129 (KR)
(72) Inventor: KIM, Cheul Soon, Daejeon 34129 (KR); NOH, Hoon Dong, Daejeon 34129 (KR); MOON, Sung Hyun, Daejeon 34129 (KR); LEE, Jung Hoon, Daejeon 34129 (KR)
(74) Representative: Betten & Resch
(86) International application number: PCT/KR2023/014610
(87) International publication number: WO 2024/071886

(57) **Abstract**

Disclosed are a coverage enhancement method and device in a full-duplex communication system. A method of a terminal comprises the steps of: receiving, from a base station, information instructing the performing of a UL transmission; and performing the UL transmission in a resource area including a SBFD symbol and a non-SBFD symbol, wherein, in the SBFD symbol, at least one communication among DL communication or UL communication may be performed, and, in the non-SBFD symbol, only one communication among the DL communication or the UL communication may be performed.

## Description

### [Technical Field]

The present disclosure relates to a communication technique, and more particularly, to a technique for coverage enhancement in a full-duplex communication system.

### [Background Art]

With the development of information and communication technology, various wireless communication technologies have been developed. Typical wireless communication technologies include long term evolution (LTE) and new radio (NR), which are defined in the 3rd generation partnership project (3GPP) standards. The LTE may be one of 4th generation (4G) wireless communication technologies, and the NR may be one of 5th generation (5G) wireless communication technologies.

The 5G communication system (e.g., communication system supporting the NR) using a higher frequency band (e.g., frequency band of 6GHz or above) than a frequency band (e.g., frequency band of 6GHz or below) of the 4G communication system is being considered for processing of wireless data soaring after commercialization of the 4G communication system (e.g., communication system supporting the LTE). The 5G communication system can support enhanced mobile broadband (eMBB), ultra-reliable low-latency communication (URLLC), massive machine type communication (mMTC), and the like. Discussion on a sixth generation (6G) communication system after the 5G communication system is in progress.

Meanwhile, when a terminal is located at an edge of a base station's coverage, a quality of communication between the terminal and the base station may deteriorate. In this case, the terminal may not be able to communicate with the base station. Methods are needed to solve the above-mentioned problem.

### [Disclosure]

### [Technical Problem]

The present disclosure is directed to providing a method and an apparatus for coverage enhancement in a full-duplex communication system.

### [Technical Solution]

A method of a terminal, according to exemplary embodiments of the present disclosure for achieving the above-described objective, may comprise: receiving, from a base station, information indicating to perform uplink (UL) transmission; and performing the UL transmission in a resource region including subband full duplex (SBFD) symbol(s) and non-SBFD symbol(s), wherein at least one of downlink (DL) communication or UL communication is able to be performed in the SBFD symbol(s), and only one of the DL communication or the UL communication is able to be performed in the non-SBFD symbol(s).

When the UL transmission is performed, the terminal may consider that an event occurs in which coherence for the UL transmission is not maintained in the resource region.

The terminal may maintain coherence for the UL transmission in a time domain window (TDW) before the event, according to an indication from the base station.

When an event occurs in the resource region in which coherence for the UL transmission is not maintained, the terminal may maintain coherence for the UL transmission in a TDW after the event.

The TDW may be configured based on at least one of capability of the terminal or an indication from the base station.

The terminal may maintain power consistency and phase continuity for communication in the SBFD symbol(s) and the non-SBFD symbol(s).

The information indicating to perform the UL transmission may indicate a physical uplink shared channel (PUSCH) repetition type A or PUSCH repetition type B.

When the UL transmission is performed based on a PUSCH repetition type A, a slot in which the UL transmission is dropped may not be considered as an available slot.

When the UL transmission is performed based on a PUSCH repetition type B, a split instance may be generated at a boundary between the SBFD symbol(s) and the non-SBFD symbol(s).

One or more symbols before a boundary between the SBFD symbol(s) and the non-SBFD symbol(s) or one or more symbols after the boundary may be configured as one or more gap symbols.

The UL transmission may be a sounding reference signal (SRS) transmission, and validity of an SRS resource in which the SRS transmission is performed may be determined at a boundary between the SBFD symbol(s) and the non-SBFD symbol(s) on a symbol, symbol subset, or port subset basis.

The UL transmission may be an SRS transmission, and validity of an SRS resource in which the SRS transmission is performed may be determined in units of the SRS resource.

A terminal, according to exemplary embodiments of the present disclosure for achieving the above-described objective, may comprise: at least one processor, and the at least one processor may cause the terminal to perform: receiving, from a base station, information indicating to perform uplink (UL) transmission; and performing the UL transmission in a resource region including subband full duplex (SBFD) symbol(s) and non-SBFD symbol(s), wherein at least one of downlink (DL) communication or UL communication is able to be performed in the SBFD symbol(s), and only one of the DL communication or the UL communication is able to be performed in the non-SBFD symbol(s).

When the UL transmission is performed, the terminal may consider that an event occurs in which coherence for the UL transmission is not maintained in the resource region.

When an event occurs in the resource region in which coherence for the UL transmission is not maintained, the terminal may maintain coherence for the UL transmission in a time domain window (TDW) after the event.

The TDW may be configured based on at least one of capability of the terminal or an indication from the base station.

When the UL transmission is performed based on a physical uplink shared channel (PUSCH) repetition type A, a slot in which the UL transmission is dropped may not be considered as an available slot.

When the UL transmission is performed based on a PUSCH repetition type B, a split instance may be generated at a boundary between the SBFD symbol(s) and the non-SBFD symbol(s).

One or more symbols before a boundary between the SBFD symbol(s) and the non-SBFD symbol(s) or one or more symbols after the boundary may be configured as one or more gap symbols.

The UL transmission may be a sounding reference signal (SRS) transmission, and validity of an SRS resource in which the SRS transmission is performed may be determined at a boundary between the SBFD symbol(s) and the non-SBFD symbol(s) on a symbol, symbol subset, or port subset basis.

### [Advantageous Effects]

According to the present disclosure, a terminal may repeatedly transmit an uplink (UL) signal/channel. A repeated transmission operation of the UL signal/channel may be performed in a resource region including SBFD symbols and non-SBFD symbols. While the repeated transmission operation of the UL signal/channel is performed, power consistency/phase continuity can be maintained. Accordingly, the communication coverage can be improved and the performance of the communication system can be improved.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a conceptual diagram illustrating a first exemplary embodiment of a subband filtering mask for DL subbands and a UL subband in a SD symbol.
FIG. 4 is a conceptual diagram illustrating a first exemplary embodiment of a slot pattern (e.g., TDD slot pattern) including SD symbols.
FIG. 5 is a conceptual diagram illustrating a first exemplary embodiment of UL transmission in resources including SD symbols and non-SD symbols.
FIG. 6 is a conceptual diagram illustrating a second exemplary embodiment of UL transmission in resources including SD symbols and non-SD symbols.
FIG. 7 is a conceptual diagram illustrating a first exemplary embodiment of a UL signal/channel transmission based on frequency hopping.
FIG. 8 is a conceptual diagram illustrating a first exemplary embodiment of an SSS monitoring operation.
FIG. 9 is a conceptual diagram illustrating a second exemplary embodiment of an SSS monitoring operation.
FIG. 10 is a conceptual diagram illustrating a third exemplary embodiment of an SSS monitoring operation.
FIG. 11 is a conceptual diagram illustrating a first exemplary embodiment of SRS resources having two ports.
FIG. 12 is a conceptual diagram illustrating a first exemplary embodiment of SRS resources having four ports.
FIG. 13 is a conceptual diagram illustrating a first exemplary embodiment of SRS resources having eight ports.
FIG. 14 is a conceptual diagram illustrating a second exemplary embodiment of SRS resources having eight ports.
FIG. 15 is a conceptual diagram illustrating a first exemplary embodiment of TRS symbols.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

A communication system to which exemplary embodiments according to the present disclosure are applied will be described. The communication system to which the exemplary embodiments according to the present disclosure are applied is not limited to the contents described below, and the exemplary embodiments according to the present disclosure may be applied to various communication systems. Here, the communication system may be used in the same sense as a communication network.

In exemplary embodiments, 'configuration of an operation (e.g., transmission operation)' may mean 'signaling of configuration information (e.g., information element(s), parameter(s)) for the operation' and/or 'signaling of information indicating performing of the operation'. 'Configuration of information element(s) (e.g., parameter(s))' may mean that the corresponding information element(s) are signaled. The signaling may be at least one of system information (SI) signaling (e.g., transmission of system information block (SIB) and/or master information block (MIB)), RRC signaling (e.g., transmission of RRC message(s), RRC parameter(s) and/or higher layer parameter(s)), MAC control element (CE) signaling (e.g., transmission of a MAC message and/or MAC CE), PHY signaling (e.g., transmission of downlink control information (DCI), uplink control information (UCI), and/or sidelink control information (SCI)), or a combination thereof.

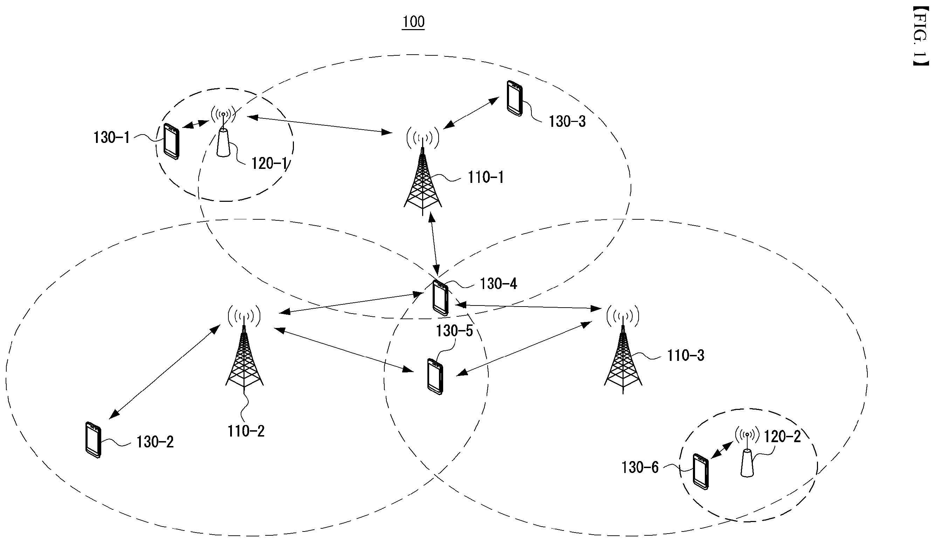

FIG. 1 is a conceptual diagram illustrating a first exemplary embodiment of a communication system.

Referring to FIG. 1, a communication system 100 may include a plurality of communication nodes 110-1, 110-2, 110-3, 120-1, 120-2, 130-1, 130-2, 130-3, 130-4, 130-5, and 130-6. In addition, the communication system 100 may further include a core network (e.g., serving-gateway (S-GW), packet data network (PDN)-gateway (P-GW), and mobility management entity (MME)). When the communication system 100 is the 5G communication system (e.g., NR system), the core network may include an access and mobility management function (AMF), a user plane function (UPF), a session management function (SMF), and the like.

The plurality of communication nodes 110 to 130 may support the communication protocols (e.g., LTE communication protocol, LTE-A communication protocol, NR communication protocol, etc.) defined by technical specifications of 3rd generation partnership project (3GPP). The plurality of communication nodes 110 to 130 may support a code division multiple access (CDMA) based communication protocol, a wideband CDMA (WCDMA) based communication protocol, a time division multiple access (TDMA) based communication protocol, a frequency division multiple access (FDMA) based communication protocol, an orthogonal frequency division multiplexing (OFDM) based communication protocol, a filtered OFDM based communication protocol, a cyclic prefix OFDM (CP-OFDM) based communication protocol, a discrete Fourier transform spread OFDM (DFT-s-OFDM) based communication protocol, an orthogonal frequency division multiple access (OFDMA) based communication protocol, a single carrier FDMA (SC-FDMA) based communication protocol, a non-orthogonal multiple access (NOMA) based communication protocol, a generalized frequency division multiplexing (GFDM) based communication protocol, a filter bank multi-carrier (FBMC) based communication protocol, a universal filtered multi-carrier (UFMC) based communication protocol, a space division multiple access (SDMA) based communication protocol, or the like. Each of the plurality of communication nodes may have the following structure.

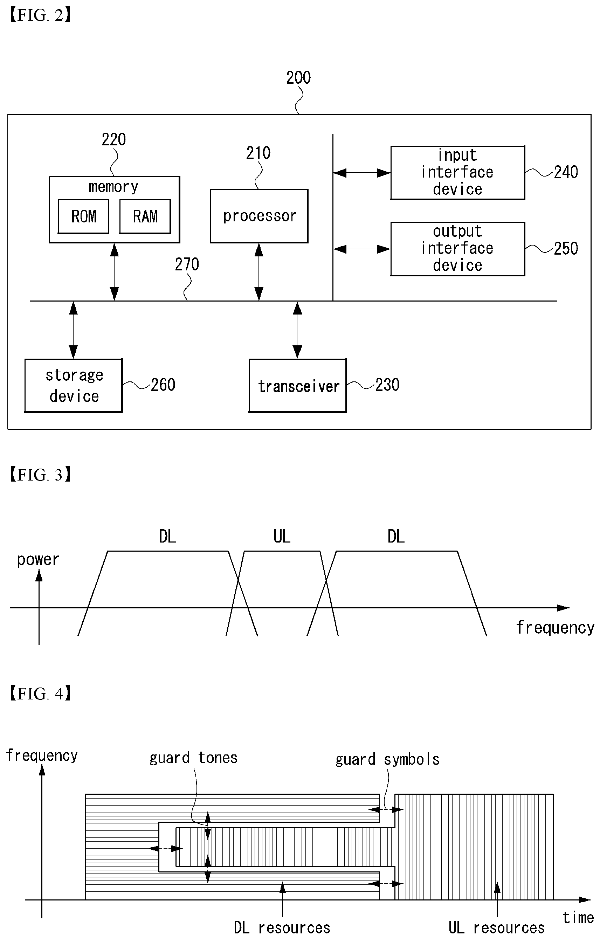

FIG. 2 is a block diagram illustrating a first exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. The respective components included in the communication node 200 may communicate with each other as connected through a bus 270.

However, each component included in the communication node 200 may be connected to the processor 210 via an individual interface or a separate bus, rather than the common bus 270. For example, the processor 210 may be connected to at least one of the memory 220, the transceiver 230, the input interface device 240, the output interface device 250, and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, an evolved Node-B (eNB), a gNB, an advanced base station (ABS), a high reliability-base station (HR-BS), a base transceiver station (BTS), a radio base station, a radio transceiver, an access point, an access node, a radio access station (RAS), a mobile multi-hop relay base station (MMR-BS), a relay station (RS), an advanced relay station (ARS), a high reliability-relay station (HR-RS), a home NodeB (HNB), a home eNodeB (HeNB), a roadside unit (RSU), a radio remote head (RRH), a transmission point (TP), a transmission and reception point (TRP), or the like.

Each of the plurality of terminals 130-1, 130-2, 130-3, 130-4, 130-5, and 130-6 may refer to a user equipment (UE), a terminal equipment (TE), an advanced mobile station (AMS), a high reliability-mobile station (HR-MS), a terminal, an access terminal, a mobile terminal, a station, a subscriber station, a mobile station, a portable subscriber station, a node, a device, an on board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., a single-user MIMO (SU-MIMO), a multi-user MIMO (MU-MIMO), a massive MIMO, or the like), a coordinated multipoint (CoMP) transmission, a carrier aggregation (CA) transmission, a transmission in unlicensed band, device-to-device (D2D) communication (or, proximity services (ProSe)), Internet of Things (IoT) communications, dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Hereinafter, operation methods of a communication node in a communication system will be described. Even when a method (e.g., transmission or reception of a data packet) performed at a first communication node among communication nodes is described, the corresponding second communication node may perform a method (e.g., reception or transmission of the data packet) corresponding to the method performed at the first communication node. That is, when an operation of the terminal is described, the corresponding base station may perform an operation corresponding to the operation of the terminal. Conversely, when an operation of the base station is described, the corresponding terminal may perform an operation corresponding to the operation of the base station.

### Chapter 1 Introduction

The scenarios to which communication is applied may be an Enhanced Mobile BroadBand (eMBB) scenario, a massive Machine-type Communication (mMTC) scenario, an Ultra-Reliable and Low-Latency Communication (URLLC) scenario, and/or a Time Sensitive Communication (TSC) scenario. The mMTC scenario, URLLC scenario, and/or TSC scenario may be applied in Internet of Things (IoT) communication. One communication network (e.g., one communication system) may support all of the scenarios described above or some of the scenarios described above. In a communication network supporting the mMTC scenario, IMT-2020 requirements can be satisfied using narrowband (NB)-IoT and LTE-MTC technologies. A lot of discussion may be needed to satisfy the requirements in a communication system supporting the URLLC scenario.

In order to reduce an error rate of data, a low modulation and coding scheme (MCS) level (or, low MCS index) may be applied. In order not to increase a size of a field indicated by downlink control information (DCI), frequently used MCS(s) may be selected. In order to apply a lower MCS, a repeated transmission operation may be supported. In case of applying a quadrature phase shift keying (QPSK) which is the lowest modulation rate, an effect of further reducing the code rate may occur. In particular, since a transmit power is limited in uplink (UL) transmission, the repeated transmission operation may be performed in the time domain rather than in the frequency domain.

In the case of eMBB traffic and URLLC traffic, a lower MCS may be used for different purposes, respectively. For example, for eMBB traffic, a lower MCS may be required to extend a coverage. On the other hand, for URLLC traffic, a lower MCS may be required to reduce a latency and achieve a lower error rate. Since the requirements are different, the eMBB traffic may be repeatedly transmitted even when a relatively large latency occurs. The URLLC traffic may be transmitted using new MCSs (e.g., low MCS) rather than the repeated transmission. The new MCS may be configured by an RRC message and/or a DCI.

In order to support repeated transmissions for the eMBB traffic in the time domain, a physical uplink shared channel (PUSCH) repetition (e.g., PUSCH repetition type A) may be introduced. In the present disclosure, a PUSCH repetition may mean a PUSCH instance. In other words, depending on the context, a PUSCH repetition may be interpreted as having the same meaning as a PUSCH instance. Repeated transmission of a PUSCH may be performed in units of PUSCH instances. When repeated transmission of a PUSCH is performed, a PUSCH allocated on a slot basis may be repeatedly transmitted. To extend a coverage, a time resource may be allocated over a plurality of slots. When the PUSCH repetition type A is used, the time resource may be configured by an RRC message and/or a DCI. The number of repetitions of the PUSCH may be indicated by the RRC message, and a time resource for transmitting the PUSCH in the first slot may be indicated by the DCI (e.g., in case of type 2 configured grant (CG) or dynamic grant) or the RRC message (e.g., in case of type 1 CG). In the present disclosure, the number of repetitions may mean the number of repeated transmissions or the number of transmissions.

In order to support URLLC traffic, it may be preferable for the terminal to perform frequent reception operations in downlink (DL) resources and/or frequent transmission operations in uplink (UL) resources. In a time division duplex (TDD) system, the terminal may operate based on a half-duplex scheme. Accordingly, a time of supporting DL traffic and/or UL traffic may increase according to a slot pattern. On the other hand, in a frequency division duplex (FDD) system, the terminal may utilize DL resources and UL resources at the same time. Accordingly, the above-described problem in the TDD system may not occur in the FDD system. The FDD system may use two or more carriers. When two or more serving cells are configured to the terminal in the TDD system, the terminal may utilize DL resources and UL resources.

In a communication system including at least one carrier to which the FDD is applied (hereinafter, referred to as 'FDD carrier'), there may be no problem with respect to a latency of the terminal. In a communication system including only carrier(s) to which the TDD is applied (hereinafter, referred to as 'TDD carrier(s)'), there may be a problem with respect to a latency of the terminal. In order to solve the above problem, slots in the TDD carriers may be configured according to different patterns.

Transmission of eMBB traffic and/or URLLC traffic may be supported in at least one of a licensed band or an unlicensed band. Carrier(s) belonging to a licensed band may be used alone. Carrier(s) belonging to an unlicensed band may be used alone. Alternatively, depending on configuration by the base station, carrier(s) belonging to a licensed band and carrier(s) belonging to an unlicensed band may be used together based on a carrier aggregation scheme.

In the present disclosure, transmission of a channel may mean transmission of a message, data, signal, and/or information on the channel, and reception of a channel may mean transmission of a message, data, signal, and/or information on the channel. The channel may be a physical downlink control channel (PDCCH), physical downlink shared channel (PDSCH), physical uplink control channel (PUCCH), physical uplink shared channel (PUSCH), physical random access channel (PRACH), physical sidelink broadcast channel (PSBCH), physical sidelink control channel (PSCCH), physical sidelink shared channel (PSSCH), and/or physical sidelink feedback channel (PSFCH).

### Chapter 2 Method of performing full-duplex communication in a subband

In a communication system supporting time division duplex (TDD), downlink (DL) communication and uplink (UL) communication may be performed in different time resources. A ratio between a DL time in which DL communication is performed and a UL time in which UL communication is performed may be determined according to a ratio of traffics (e.g., DL traffic and/or UL traffic). For example, in the NR system, the amount of DL traffic is greater than the amount of UL traffic, so DL slots may be allocated more than UL slots. For example, slots (e.g., slot pattern) may be configured so that a pattern 'DDDSU' is repeated. Here, D may mean a DL slot, S may mean a slot including DL symbol(s), flexible (FL) symbol(s), and UL symbol(s), and U may mean a UL slot. An arrangement order of symbols in the S slot may be DL symbol(s)-FL symbol(s)-DL symbol(s). A base station may indicate or configure a slot pattern to terminal(s) through signaling (e.g., RRC signaling). The base station may indicate some FL symbol(s) among FL symbols configured by RRC signaling as DL symbol(s) or UL symbol(s). The some FL symbol(s) may be indicated as DL symbol(s) or UL symbol(s) by a DCI.

A terminal located at a cell edge may repeatedly transmit a UL signal/channel to deliver UL traffic to the base station. In this case, at the base station, a signal to interference plus noise ratio (SINR) may be improved and a block error rate (BLER) may be reduced. In the present disclosure, a UL signal/channel may mean a UL signal and/or UL channel, and a DL signal/channel may mean a DL signal and/or DL channel. The base station may indicate the terminal to repeatedly transmit a UL signal/channel, and the terminal may repeatedly transmit the UL signal/channel based on the indication from the base station. The base station may indicate the terminal to repeatedly receive a DL signal/channel, and the terminal may repeatedly receive the DL signal/channel based on the indication from the base station. If UL slots do not occur frequently, a lot of delay may occur for the terminal to acquire sufficient UL slots for repeated transmission. For example, when a pattern 'DDDSU' is configured and a subcarrier spacing (SCS) is 30kHz, a UL slot may occur every 2.5ms. In this case, a time required for four repetitions of a UL signal/channel may be 10 ms.

In order to reduce such the time delay, a method of improving a frequency shape of the slot may be considered. The base station may perform full duplex communication. A frequency region for a DL symbol (or FL symbol) of a DL slot (or DL slot and S slot) may be divided into subbands. The base station may perform a transmission operation of a DL signal/channel or a reception operation of a UL signal/channel in some subbands of the DL slot (e.g., DL symbol or FL symbol). Although the terminal performs half-duplex communication, the terminal may perform a transmission operation of a UL signal/channel in the DL slot (e.g., DL symbol or FL symbol). A symbol capable of DL communication and UL communication may be referred to as a subband full duplex (SBFD) symbol or SD symbol. In the present disclosure, a SD symbol may refer to a SBFD symbol. The base station may configure SD symbols and/or non-SD symbols to the terminal through signaling. The terminal may receive configuration information of SD symbols and/or non-SD symbols from the base station. DL communication or UL communication may be performed in non-SD symbols.

Since DL communication and UL communication are performed in one SD symbol (e.g., the same time resource), a guard band may be introduced. A bandwidth of the guard band may vary depending on the amount of interference at the base station. When different antenna arrays are used, coupling between DL communication and UL communication may be reduced. If a small coupling occurs between DL and UL communications, the guard band may be unnecessary or a less bandwidth may be required for the guard band. In this case, the guard band may not be separately allocated. Alternatively, a small number of PRBs may be allocated for the guard band.

When a small coupling occurs between DL and UL communications, a separate Rx filtering operation or Rx processing operation may be performed at the base station, but a separate Tx filtering operation or Tx processing operation may be unnecessary at the terminal. The filtering operation may be a radio frequency (RF) filtering operation. When the RF filtering operation is performed, a spectral emission (e.g., out-of-band emission (OOB) or adjacent channel leakage ratio (ACLR)) to adjacent PRB(s) may be reduced, and saturation of RF elements may be prevented.

A DL subband and a UL subband may have different frequencies. When a leakage occurs, an analog-to-digital converter (ADC) may become saturated and small signals may be ignored. Therefore, the base station may appropriately arrange shielding between antenna arrays or apply signal processing methods. In this case, the base station may allocate a guard band with a less bandwidth.

FIG. 3 is a conceptual diagram illustrating a first exemplary embodiment of a subband filtering mask for DL subbands and a UL subband in a SD symbol.

Referring to FIG. 3, illustrated is a power spectral density or spectral mask for DL-related filtering and/or UL-related filtering. The DL-related filtering may be performed at the base station, and the UL-related filtering may be performed at the terminal. A UL subband may be located at the center of a carrier, and two DL subbands may exist. A DL frequency band may be divided into two DL subbands by the UL subband. For another example, two or more UL subbands may exist, and DL subbands may exist in the remaining frequency band.

The base station may not perform DL-related filtering by additionally considering the location of the DL subbands and/or UL subband. The terminal may perform UL-related filtering by considering the location of the UL subband.

In order to add (e.g., transmit) a UL signal/channel while minimizing the number of UL slots in a slot pattern, SD symbols may be introduced. The base station may indicate or configure repeated transmission of a UL signal/channel to terminals located at a cell edge. The terminal may identify that repeated transmission of a UL signal/channel is required based on the indication or configuration by the base station. Scheduling information allocating a PUSCH/PUCCH may include a repetition factor for time resources. The terminal may identify the repetition factor included in the scheduling information. The repetition factor may indicate that the PUSCH/PUCCH is repeatedly transmitted n times. n may be a natural number. One repetition may mean one transmission of the PUSCH/PUCCH. If the repetition factor is not indicated to the terminal (e.g., if the scheduling information does not include the repetition factor), the terminal may transmit the PUSCH/PUCCH once. In the present disclosure, a PUSCH/PUCCH may mean a PUSCH and/or PUCCH. The scheduling information may include resource allocation information, resource activation information, and/or resource deactivation information. The scheduling information may be included in an RRC message, MAC message (e.g., MAC CE), and/or PHY message (e.g., DCI).

In order to extend a reach distance of a UL signal/channel, the base station may indicate the terminal to perform demodulation-reference signal (DM-RS) bundling through signaling (e.g., RRC signaling). The terminal may identify that DM-RS bundling is required based on the signaling from the base station. The performing of DM-RS bundling may mean maintaining power consistency/phase continuity in repeated PUSCH/PUCCH transmission. The base station may perform channel estimation operations at once while power consistency/phase continuity is maintained. Accordingly, the reception performance of the PUSCH/PUCCH at the base station may be improved. The power consistency/phase continuity may mean power consistency and/or phase continuity. The power consistency/phase continuity may refer to coherence (e.g., time coherence).

The base station may allocate SD symbols. An arrangement order of symbols in a slot may be DL symbol(s)-SD symbol(s)-UL symbol(s). FL symbol(s) may be located between the DL symbol and the SD symbol. Alternatively, FL symbol(s) between the DL symbol and the SD symbol may be omitted. FL symbol(s) may be located between the SD symbol and the UL symbol. Alternatively, FL symbol(s) between the SD symbol and the UL symbol may be omitted.

FIG. 4 is a conceptual diagram illustrating a first exemplary embodiment of a slot pattern (e.g., TDD slot pattern) including SD symbols.

Referring to FIG. 4, SD symbol(s) may be located after DL symbol(s), and UL symbol(s) may be located after the SD symbol(s). A frequency band for the SD symbol(s) may be divided into DL subbands and a UL subband.

A UL bandwidth for the SD symbols may be different from a UL bandwidth for the UL symbols. Therefore, the base station may apply different filtering operations to the SD symbols and UL symbols. When necessary, the terminal may apply different filtering operations to the SD symbols and the UL symbols (or DL symbols). The application of different filtering operations may mean that different filtering operations are applied before and after a boundary between the SD symbol and the UL symbol. In this case, power consistency/phase continuity may not be maintained in a transmission/reception procedure of a UL signal/channel.

### 2.1 DM-RS bundling for UL joint channel estimation

The base station may indicate the terminal to perform DM-RS bundling through signaling (e.g., RRC signaling). The terminal may perform DM-RS bundling according to the indication from the base station. In this case, power consistency/phase continuity (e.g., coherence) may be maintained while repeated transmission of a PUCCH/PUSCH is performed. A time for which the terminal maintains power consistency/phase continuity may be referred to as a nominal time domain window (TDW) and/or actual TDW. An event may occur that does not maintain power consistency/phase continuity in the nominal TDW, and power consistency/phase continuity may not be maintained after the event. In this case, a TDW before the event may be defined as an actual TDW. The base station may indicate the terminal through signaling (e.g., RRC signaling) to maintain power consistency/phase continuity (e.g., time coherence) in the TDW before the event. The terminal may maintain power consistency/phase continuity (e.g., time coherence) in the TDW before the event according to the indication from the base station. Depending on capability of the terminal, an actual TDW may be restarted after the event, and the terminal may maintain power consistency/phase continuity in the actual TDW after the event.

The event may be classified into a semi-static event and a dynamic event. The semi-static event may refer to an event in which power consistency/phase continuity is not maintained by semi-static configuration (e.g., frequency hopping, TDD slot pattern, etc.) before termination of a nominal TDW.

The terminal may assume that an actual TDW starts after a semi-static event (e.g., frequency hopping, change in a sounding reference signal (SRS) resource set, change in spatial relation, and/or change in power control parameters) rather than a dynamic event. In other words, the terminal may assume that power consistency/phase continuity is maintained after a semi-static event rather than a dynamic event. The terminal may regard the following event(s) as an event in which power consistency/phase continuity is not maintained. Depending on capability of the terminal, an actual TDW may not be regenerated after the event.

A reception operation in DL symbols indicated by signaling (e.g., RRC signaling) between UL symbols may be considered as an event. A case when a gap wider than 13 symbols (or 11 symbols in case of using an extended cyclic prefix (CP)) occurs for two consecutive PUSCH/PUCCH transmissions may be considered as an event. A case when a gap not wider than 13 symbols or 11 symbols occurs for two consecutive PUSCH/PUCCH transmissions, but another UL signal/channel transmission is performed may be considered as an event. When PUSCH repetition type A is used, when PUSCH repetition type B is used, or when a TB is mapped to a plurality of slots (e.g., when TB processing is performed in a plurality of slots), drop/cancellation of a PUSCH according to a UL prioritization/multiplexing procedure, drop/cancellation of a PUSCH due to a difference between slot patterns, or drop/cancellation of a PUSCH due to a UL cancellation indication may occur.

The occurrence of drop/cancellation of a PUSCH may be considered as an event. The drop/cancellation may mean drop and/or cancellation. A change in an association relationship of an SRS resource set between two consecutive PUSCH instances may be considered as an event. A case when two different PUSCH instances are configured with respective SRS resource sets, and spatial relations or TCIs of SRS resources belonging to the SRS resource sets of the two different PUSCH instances are different may be considered as an event. A change in at least one spatial relation or power control parameter for two consecutive PUCCH instances may be considered as an event. A reception operation of a timing advance (TA) command or performing a change or update of the TA in order to match the TA to the terminal's own limitations may be considered as an event. Performance of frequency hopping of a PUCCH or PUSCH may be considered as an event.

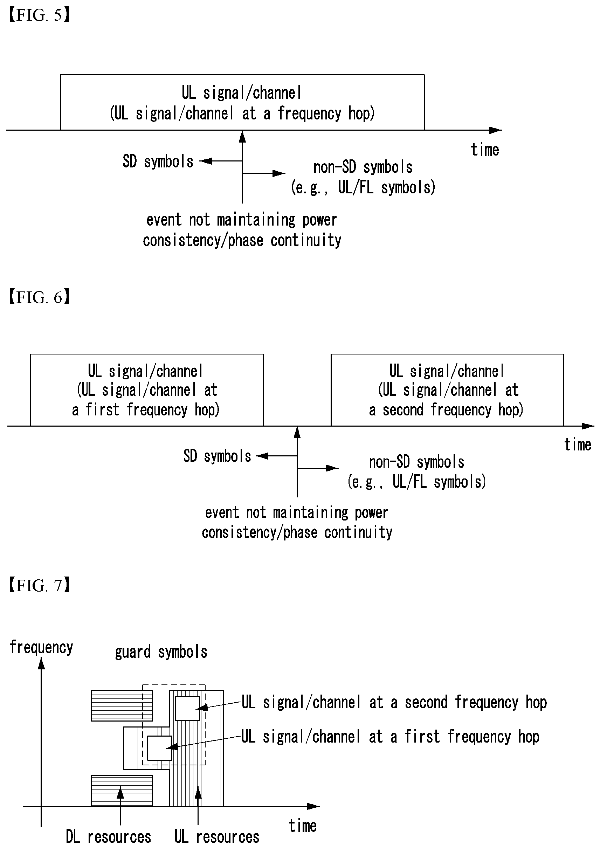

FIG. 5 is a conceptual diagram illustrating a first exemplary embodiment of UL transmission in resources including SD symbols and non-SD symbols.

Referring to FIG. 5, a UL signal/channel may be transmitted in resources including SD symbols and non-SD symbols (e.g., SD symbols and non-SD symbols for one frequency hop). The non-SD symbol may be a UL symbol or FL symbol. Transmissions for the UL signal/channel having the same frequency resource may be performed in time resources including both SD symbols and non-SD symbols. The UL signal/channel may be transmitted using the same antenna port(s). Therefore, the terminal may apply the same filtering 1 to all symbols in which the UL signal/channel is transmitted. The filtering 1 may refer to a technique to reduce spectral emission to adjacent PRB(s).

**In a proposed method, when a UL signal/channel is transmitted in time resources including SD symbols and non-SD symbols, the terminal may maintain power consistency and phase continuity.**

As an example, the terminal may not change the filtering applied to the UL signal/channel.

The base station may indicate the terminal to perform frequency hopping for the UL signal/channel. The terminal may identify the indication from the base station. In this case, the terminal may apply the same filtering 1 at at least the same frequency hop, and apply filtering 2 with a shifted center frequency at another frequency hop. The transmission of the UL signal/channel may be performed taking into account a time required for changing the filtering (e.g., filtering scheme).

The base station may indicate the terminal to perform DM-RS bundling through signaling (e.g., RRC signaling). The terminal may identify the indication from the base station. The terminal and/or base station may change filtering (e.g., filtering scheme) at a boundary between the SD symbols and non-SD symbols. For example, the terminal and/or the base station may apply filtering 1 with a narrow bandwidth in the SD symbols and apply filtering 2 with a wide bandwidth in the non-SD symbols.

FIG. 6 is a conceptual diagram illustrating a second exemplary embodiment of UL transmission in resources including SD symbols and non-SD symbols.

Referring to FIG. 6, a UL signal/channel may be transmitted in resources including SD symbols and non-SD symbols (e.g., SD symbols and non-SD symbols for one frequency hop). The non-SD symbol may be a UL symbol or FL symbol. The base station may indicate the terminal to perform DM-RS bundling in a repeated transmission procedure of the UL signal/channel. The terminal may identify the indication from the base station. The terminal may regard a TDW before occurrence of an event as an actual TDW, and may transmit the UL signal/channel in the considered actual TDW. After an event occurs, the terminal may generate (e.g., configure) a new actual TDW according to capability of the terminal and/or signaling (e.g., indication and/or configuration from the base station by RRC signaling). Time coherence may be maintained in the new actual TDW.

**In a proposed method, the terminal and/or base station may consider an event as occurring at a boundary between the SD symbols and non-SD symbols.**

For example, the terminal and/or the base station may derive the boundary between the SD symbols and non-SD symbols based on a TDD slot pattern. Alternatively, the base station may indicate location(s) of a SD slot, SD symbols, and/or UL subband (e.g., RB set) to the terminal through signaling. The terminal may derive the boundary between the SD symbols and non-SD symbols based on the indication from the base station. The above information (or operation) may be indicated by semi-static configuration. Therefore, the terminal may regard the event as a semi-static event.

The base station may dynamically indicate a pattern of the SD symbols and/or the location of the UL subband to the terminal. The terminal may identify the indication from the base station. The pattern of the SD symbols and/or the location of the UL subband may be indicated using a group common DCI format. Alternatively, the pattern of the SD symbols and/or the location of the UL subband may be implicitly derived based on a scheduling DCI. The scheduling DCI may be a DCI that includes resource allocation information for DL communication or UL communication. The base station may use a MAC CE to indicate the terminal to activate or deactivate time/frequency resources (e.g., a portion of time/frequency resources). The terminal may identify the indication from the base station. The terminal may regard the indication (e.g., indication to activate or deactivate time/frequency resources) as a dynamic event. The time/frequency resources may refer to time resources and/or frequency resources.

After occurrence of the semi-static event or dynamic event, the terminal may generate (e.g., configure) a new actual TDW according to capability of the terminal. Alternatively, the terminal may not generate a new actual TDW according to capability of the terminal. In this case, channel estimation may be performed for each slot. The maximum length during which DM-RS bundling can be performed (e.g., maximum number of slots) may be configured according to capability of the terminal. An actual TDW that does not exceed the maximum length during which DM-RS bundling can be performed may be generated. The base station may indicate the terminal to activate (e.g., enable) a specific RRC parameter (e.g., *pusch-WindowRestart* or *pucch-WindowRestart*)*.* The terminal may identify the indication from the base station. The terminal may start a new actual TDW from the first symbol of PUSCH transmission (or PUCCH transmission) in which the event occurs. The last symbol of the actual TDW may not be later than the last symbol of the nominal TDW.

Transmission of the UL signal/channel at the boundary between the SD symbols and non-SD symbols may be affected. In other words, power consistency/phase continuity for the UL signal/channel may not be maintained at the boundary between the SD symbols and non-SD symbols. Whether power consistency/phase continuity for the UL signal/channel is maintained at the boundary between the SD symbols and non-SD symbols may be indicated by signaling (e.g., RRC signaling) of the base station.

### 2.2 UL signals/channels allowed to be transmitted in SD symbols

When a UL signal/channel is transmitted in a SD symbol, all frequency resources through which the UL signal/channel is transmitted may belong to a UL subband of the SD symbol. Alternatively, some frequency resources through which the UL signal/channel is transmitted may belong to a frequency band outside the UL subband of the SD symbol. In this case, transmission of the UL signal/channel may be dropped/cancelled.

If a portion of transmission of a UL signal/channel is determined to be invalid, the terminal may drop/cancel the entire transmission of the UL signal/channel. If transmission of a UL signal/channel is dropped/cancelled due to a slot pattern, the transmission of the UL signal/channel may be dropped/cancelled at all frequency hops. If transmission of a UL signal/channel is canceled by ULCI, the transmission of the UL signal/channel may be dropped/cancelled at all frequency hops.

If a bandwidth of a UL subband changes depending on symbols, the terminal may transmit a UL signal/channel on a frequency hop basis. A one-time transmission procedure of a UL signal/channel may be performed based on intra-slot frequency hopping. A repeated transmission procedure of a UL signal/channel may be performed based on intra-slot frequency hopping or inter-slot frequency hopping. The transmission of a UL signal/channel on a frequency hop basis may correspond to one UL signal/channel repetition.

FIG. 7 is a conceptual diagram illustrating a first exemplary embodiment of a UL signal/channel transmission based on frequency hopping.

Referring to FIG. 7, the terminal may transmit a UL signal/channel based on frequency hopping. The first frequency hop of the UL signal/channel may be transmitted in symbols including a SD symbol. The first frequency hop of the UL signal/channel may be scheduled in frequency resource(s) belonging to a UL subband of the SD symbol. The second frequency hop of the UL signal/channel may not belong to the UL subband of the SD symbol. In other words, the second frequency hop of the UL signal/channel may belong to a UL subband of a non-SD symbol. Therefore, the frequency hops of the UL signal/channel may be transmitted in valid UL resource(s) of the symbols.

**According to a proposed method, the terminal may determine a UL subband in which the UL signal/channel can be transmitted for each frequency hop.**

If a frequency hop of the UL signal/channel is outside the UL subband of the SD symbol, the terminal may drop or cancel transmission of the UL signal/channel or a repetition (e.g., actual repetition, actual instance) the UL signal/channel. When repeated transmission of a PUCCH or PUSCH repetition type A is performed (e.g., when *availableSlotCounting* is configured), the drop/cancellation of the UL signal/channel may not be counted as the number of repetitions. In other words, a slot in which transmission of the UL signal/channel is dropped/cancelled may not be considered as an available slot.

In order to extend a reach distance of a UL signal/channel and reduce a delay thereof, the base station may indicate the terminal to repeatedly transmit the UL signal/channel. The repeated transmission may be classified into repeated transmission according to a slot periodicity (e.g., subslot periodicity) and continuous repeated transmission. The indication for repeated transmission of a UL signal/channel may include an indication of PUSCH repetition type A or PUSCH repetition type B.

### 2.2.1 PUSCH transmission

Repeated transmission of a PUCCH and/or PUSCH repetition type A may be performed in consecutive slots (e.g., subslots). The same time/frequency resource may be allocated for PUCCH repetition and/or PUSCH repetition type A in each of the slots (e.g., subslots). To ensure the number of repetitions of a PUSCH in a TDD-based communication system, the base station may indicate a parameter (e.g., *AvailableSlotCounting*) to the terminal through separate signaling (e.g., RRC signaling). The terminal may identify the indication from the base station. The number of repetitions of a PUCCH may be guaranteed without the signaling of the base station (e.g., signaling of *AvailableSlotCounting*)*.* Operations according to PUSCH repetition type A may be scheduled at least by a DCI.

**In a proposed method, symbol(s) allocated for a PUSCH may consist of only SD symbols or only non-SD symbols. In this case, the PUSCH (e.g., PUSCH transmission, PUSCH instance, PUSCH repetition) may be determined to be**

**valid.** When the PUSCH is scheduled by a DCI, frequency resources of the PUSCH indicated by the DCI may belong to a UL subband (e.g., a UL subband of the SD symbol), and time resources of the PUSCH indicated by the DCI symbol may have the same duplex.

**In another proposed method, when frequency resources of a PUSCH belong to a UL subband, the PUSCH (e.g., PUSCH transmission, PUSCH instance) may be determined as valid, regardless of whether symbol(s) allocated for the PUSCH are SD symbols or non-SD symbols.**

The base station may configure (e.g., indicate) PUSCH repetition type B to the terminal. The terminal may receive the configuration of PUSCH repetition type B from the base station. PUSCH resources may be determined by a scheduling DCI. Alternatively, The PUSCH resources may be indicated by RRC signaling. For example, a type 1 configured grant (CG) PUSCH may be configured to the terminal by RRC signaling. Alternatively, the PUSCH resources may be indicated by RRC signaling and DCI (e.g., activating DCI). For example, a type 2 CG PUSCH may be configured to the terminal by RRC signaling and activating DCI.

When PUSCH repetition type B is configured, nominal PUSCH repetitions may be allocated consecutively in the time domain. One nominal PUSCH repetition may be divided into two or more actual PUSCH repetitions at a boundary of a slot, a boundary of a DL symbol, or a boundary of a FL symbol. A boundary of a DL symbol or a boundary of a FL symbol may mean a boundary between a DL symbol and a FL symbol. Additional DM-RS symbol(s) for actual PUSCH repetitions may be allocated, and a rate matching operation for data may be performed on the remaining symbol(s). The DM-RS symbol(s) may mean symbol(s) in which a DM-RS is mapped (e.g., transmitted).

Considering SD symbols, the terminal may perform a monitoring operation on a search space set (SSS), and perform PUSCH transmission. In the present disclosure, a monitoring operation on an SSS (i.e., SSS monitoring operation) may mean an operation including a reception operation of DCI in the SSS. The terminal may select one of a DL reception operation and a UL transmission operation by considering a priority.

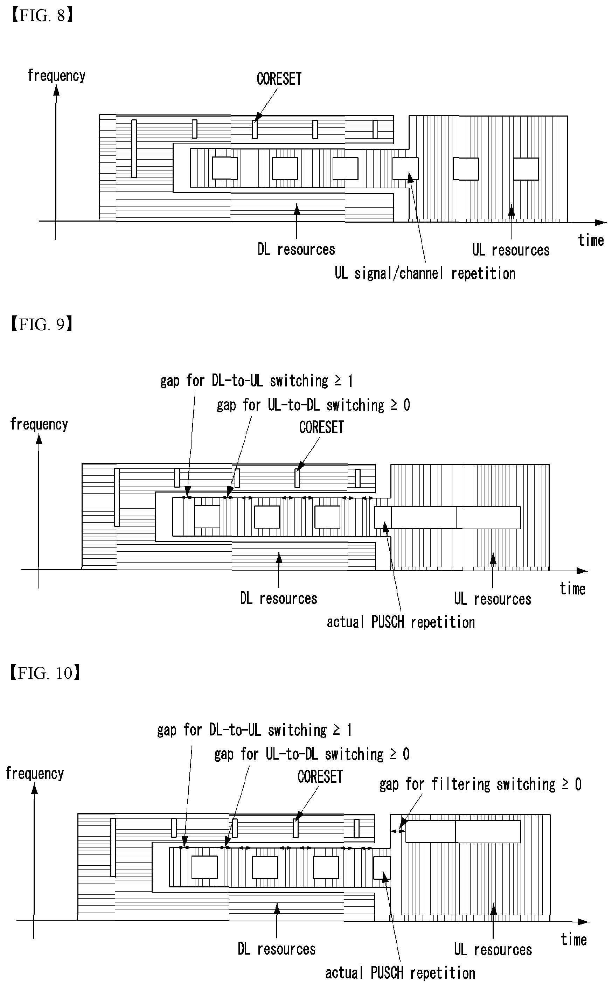

FIG. 8 is a conceptual diagram illustrating a first exemplary embodiment of an SSS monitoring operation.

Referring to FIG. 8, when UL signal/channel repetitions (e.g., UL signal/channel instances) are configured, the terminal may perform an SSS monitoring operation. While the terminal performs the SSS monitoring operation, transmission of continuous UL signals/channels may be scheduled to the terminal. Alternatively, while the terminal performs the SSS monitoring operation, the terminal may repeatedly transmit the UL signal/channel. The operation may be an operation according to PUCCH repetition or PUSCH repetition type A. In the exemplary embodiment of FIG. 8, frequency hopping may not be performed. Since the terminal performs a DL reception operation in a SD symbol where the SSS monitoring operation performed, the terminal may not perform a UL transmission operation in the SD symbol. The base station may appropriately schedule so that the SSS monitoring operation and a UL transmission operation are not performed simultaneously according to a periodicity of the SSS. The above operation may be applied to operations according to scheduling DCI, activating DCI, and/or CG configuration.

SD symbol(s) may be configured to a terminal located in a cell edge. Therefore, it may be preferable that transmission of URLLC traffic is not supported in SD symbols. The terminal may not receive an indication of a priority index. Alternatively, the terminal may receive an indication of 'priority index = 0'. The terminal may perform an SSS monitoring operation in SD symbols. Since there may be data scheduled by DCI with a CRC scrambled by a cell (C)-radio network temporary identifier (RNTI) or modulation and coding scheme (MCS)-RNTI, it may be preferrable that the terminal receives the scheduling DCI in the SD symbol. **In a proposed method, the terminal may consider that an SSS monitoring operation has a higher priority than a priority of a data transmission and reception operation.**

For a monitoring operation on a control resource set (CORESET)/SSS, some SD symbols may be allocated for DL reception operations. Therefore, the terminal may not be able to perform continuous UL signal/channel transmissions in consecutive SD symbols. A CORESET/SSS may mean a CORESET and/or SSS. In a proposed method, when an operation according to PUSCH repetition type B is performed, the terminal may regard SD symbol(s) as invalid symbol(s). The terminal may perform operations according to PUSCH repetition type B using FL symbol(s) and/or UL symbol(s).

When an operation according to PUSCH repetition type B is performed, a split instance or actual repetition may be generated (e.g., configured) at a boundary between a SD symbol and a non-SD symbol. The split instance may be generated by the base station and/or terminal.

FIG. 9 is a conceptual diagram illustrating a second exemplary embodiment of an SSS monitoring operation.

Referring to FIG. 9, an operation according to PUSCH repetition type B may be performed in SD symbols, and the terminal may perform continuous UL signal/channel transmissions. The operation according to PUSCH repetition type B may be performed without performing frequency hopping. The terminal may reduce spectral emissions by applying filtering 1 on the SD symbols. In FIG. 9, an actual PUSCH repetition may mean an actual PUSCH instance.

FIG. 10 is a conceptual diagram illustrating a third exemplary embodiment of an SSS monitoring operation.

Referring to FIG. 10, an operation according to PUSCH repetition type B may be performed in SD symbols, and the terminal may perform continuous UL signal/channel transmissions. In the operation according to PUSCH repetition type B, frequency hopping (e.g., inter-slot frequency hopping) may be applied. In this case, the terminal may apply filtering 1 to the SD symbols and apply filtering 2 to non-SD symbols. At a boundary between SD symbols and non-SD symbols, filtering may be changed from the filtering 1 to the filtering 2. The operation of changing the filtering may refer to an operation of changing a center frequency or an operation of expanding a bandwidth without changing a center frequency. In FIG. 10, an actual PUSCH repetition may mean an actual PUSCH instance.

A gap may be required before and/or after the SD symbol in which the operation according to PUSCH repetition type B and the SSS monitoring operation are performed.

In a proposed method, an operation of the terminal performing the operation according to PUSCH repetition type B may be switched to a DL reception operation in the SD symbol in which the SSS monitoring operation is performed. At a boundary of the SD symbol(s), a nominal PUSCH repetition (or nominal PUSCH repetition) may be divided into actual PUSCH repetition(s) (or actual PUSCH instance(s)). A switching gap may be required between the SSS monitoring operation and the transmission operation of the actual PUSCH repetition. A DL-to-UL gap and/or UL-to-DL gap may be considered.

Considering a DL-to-UL gap, a round trip delay (RTD), which reflects a distance between the terminal and the base station, may be summed with a duplex switching delay. The RTD may be a dominant factor. If the terminal is located in a cell edge, SD symbol(s) for the DL-to-UL gap may be allocated.

**In a proposed method, the base station may indicate the DL-to-UL gap (e.g., number of SD symbols) to the terminal through signaling (e.g., RRC signaling).** The DL-to-UL gap may be applied from the last symbol of a DL signal/channel received by the terminal. The first symbol of a UL signal/channel that the terminal desires to transmit may be derived by applying the DL-to-UL gap from the last symbol of the DL signal/channel. Information indicating whether to apply the DL-to-UL gap may be included in scheduling information for PUSCH repetition type B.

Considering a UL-to-DL gap, a duplex switching delay may be considered. The DL-to-UL gap may be reflected in a previous or subsequent symbol at a boundary between SD symbols or a boundary between a SD symbol and a UL symbol. When a nominal PUSCH repetition is divided, two actual PUSCH repetitions (e.g., actual PUSCH repetition 1 and actual PUSCH repetition 2) may be generated. Considering the actual PUSCH repetition 1 and PUSCH actual repetition 2, additional symbol(s) may not be allocated to consider the UL-to-DL gap, and the UL-to-DL gap may be reflected in the PUSCH actual repetition 1. The PUSCH actual repetition 2 may begin with a DM-RS symbol. Therefore, transmission may not be performed in a portion of the last symbol of PUSCH actual repetition 1 in order to take a duplex switching delay into account.

According to another proposed method, gap symbol(s) (or gap sample(s)) may be applied to a UL signal/channel that follows in the time domain. If the first symbol(s) of the following UL signal/channel is invalid, a part or all of the following UL signal/channel may not be transmitted. In case of a PRACH, PUCCH, and/or PUSCH, the entire transmission thereof may not be performed. If some SRS symbols overlap with gap symbol(s), an SRS may not be transmitted in some SRS symbols that overlap with the gap symbol(s), and the SRS may be transmitted in the remaining SRS symbols that do not overlap with the gap symbol(s). The SRS symbol may be a symbol configured for SRS transmission.

In the time domain, the following UL signals/channel may be transmitted from the first symbol after the gap symbol. In this case, the last symbol(s) of the following UL signal/channel may be punctured and/or dropped by the size (amount) of the gap symbol(s). Alternatively, a rate matching operation may be performed on symbol(s) excluding the last symbol(s) of the following UL signal/channel.

The length of the gap symbol (e.g., a symbol for the DL-to-UL gap or UL-to-DL gap) may vary according to a SCS. The SCS may be a SCS for an active DL BWP or an active UL BWP. The SCS may be a combination of the SCS of the active DL BWP and the SCS of the active UL BWP. Alternatively, the SCS may be configured based on a reference numerology.

The first symbol of a UL signal/channel may be determined by additionally applying a TA after N_{gap} symbol(s) from the last symbol in which a DL signal/channel is received. Alternatively, the first symbol of a UL signal/channel may be determined without additional application of a TA after N_{gap} symbol(s) from the last symbol in which a DL signal/channel is received. N_{gap} may be the number of gap symbols.

A minimum gap (e.g., N_{gap} symbol(s)) may be required between the last symbol in which an SSB is received and the first symbol in which a PRACH is transmitted. Based on Table 1 below, a value of N_{gap} may be applied according to a SCS of a PRACH preamble.

**[Table 1]**

| **SCS of PRACH preamble** | **N_{gap}** |
|---|---|
| 1.25 kHz or 5 kHz | 0 |
| 15 kHz, 30 kHz, 60 kHz, or 120 kHz | 2 |
| 480 kHz | 8 |
| 960 kHz | 16 |

The gap symbols may be considered as an invalid symbol pattern. The number of gap symbols, an enable indication for gap symbols, and/or a disable indication for gap symbols may be included in scheduling information transmitted to the terminal. The gap symbols may occur at a boundary between a SD symbol and a UL symbol.

In the exemplary embodiment of FIG. 9, some of the SD symbol(s) may be considered as gap symbols. Since data is mapped to the last symbol(s) of a preceding UL signal/channel, if some of the SD symbol(s) are considered as gap symbols, application of a puncturing operation, dropping operation, and/or rate matching operation may be easy. In the exemplary embodiment of FIG. 10, some of the UL symbol(s) may be considered as gap symbols. 'Considering a portion of the UL symbol(s) as gap symbol(s)' may refer to performing a puncturing operation, a dropping operation, and/or a defer operation on the first symbol(s) of a following UL signal/channel. Since a puncturing operation and/or dropping operation for a DM-RS symbol can be performed, it may be preferrable to perform a defer operation for the UL signals/channel.

### 2.2.2 SRS transmission

Considering SD symbol(s) in SRS transmission, the terminal may operate as follows. One SRS resource set may include one or more SRS resources. An SRS resource may include one or more SRS symbols. Transmission for all SRS ports may be performed in the same symbol (e.g., the same SRS symbol), and the number of SRS symbols may be the same as the number of SRS ports that the SRS resource has. The number of SRS ports may be 4 or less. Different SRS ports may be distinguished in the same symbol based on at least one of repetitions, different transmission combs, cyclic shifts, partial sounding, or frequency hopping.

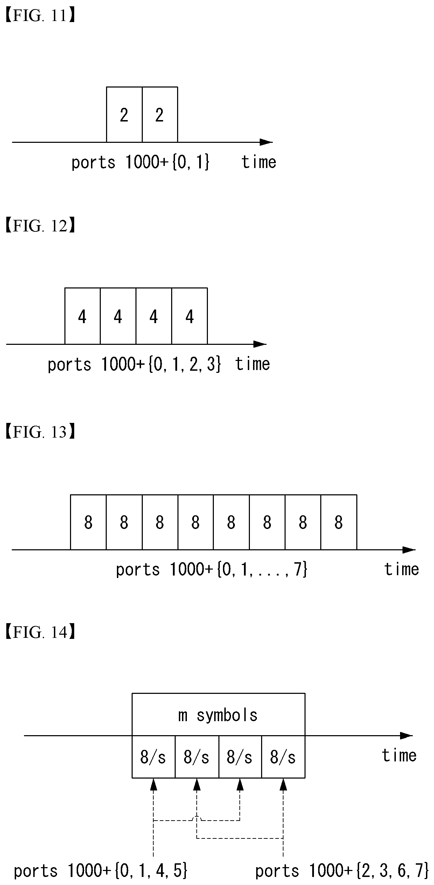

FIG. 11 is a conceptual diagram illustrating a first exemplary embodiment of SRS resources having two ports.

Referring to FIG. 11, the terminal may transmit SRS in SRS resources having two ports (e.g., two SRS ports).

FIG. 12 is a conceptual diagram illustrating a first exemplary embodiment of SRS resources having four ports.

Referring to FIG. 12, the terminal may transmit SRS in SRS resources having four ports (e.g., four SRS ports).

FIG. 13 is a conceptual diagram illustrating a first exemplary embodiment of SRS resources having eight ports.

Referring to FIG. 13, the terminal may transmit SRS in SRS resources having eight ports (e.g., eight SRS ports).

FIG. 14 is a conceptual diagram illustrating a second exemplary embodiment of SRS resources having eight ports.

Referring to FIG. 14, the terminal may transmit SRS in SRS resources having eight ports (e.g., eight SRS ports). When eight ports are defined, SRS resources (e.g., m symbols) may be divided into s port sets. SRS transmission for specific SRS ports may all be performed in SRS symbol(s) belonging to one symbol set. Each of m and s may be a natural number.

When eight ports are defined, s is 2, and m is 4, a half of the SRS ports may be divided into different symbol sets, and SRS transmission may be performed alternately in SRS resources (e.g., SRS sub-resources) belonging to a symbol set. m may be the number of symbols belonging to SRS resources configured in one slot. s may be a value that divides the SRS ports. Subsets of SRS ports may be repeatedly mapped to m symbols in the order of 1,2,3,. .., and s. Therefore, SRS transmission for each of all SRS ports in s ports (e.g., s symbols) belonging to SRS resources may be performed once.

Depending on configuration by the base station, the terminal may receive an indication of the number R of repetitions. In this case, the SRS transmission may be repeated R times. If frequency hopping is performed in the SRS transmission, frequency hopping may not be performed while the SRS transmission is repeated R times, and frequency hopping may be performed after the SRS transmission is repeated R times.

When the exemplary embodiment of FIG. 13 is generalized, SRS transmission may be performed in 8 × R symbols, and the SRS may be transmitted in the same frequency resource in R consecutive symbols.

When the exemplary embodiment of FIG. 14 is generalized, SRS transmission may be performed in s×R symbols, and the SRS may be transmitted in the same frequency resource in consecutive s×R symbols.

A unit where SRS transmissions for all SRS ports occur respectively once in s SRS symbols may be referred to as an SRS port subset. Depending on configuration by the base station, SRS resources may include SD symbol(s) and non-SD symbol(s), and the terminal may transmit SRS in the SRS resources. A symbol in which a duplex type changes may occur in the same SRS port subset.

**In a proposed method, the terminal may assume the same duplex type in an SRS port subset. In other words, the terminal may assume that SRS resources for an SRS port subset include only SD symbols or only non-SD symbols.**

**In another proposed method, if a duplex type changes, it may be difficult for the base station to perform processing or Rx processing on the same Rx beam. Therefore, the terminal may determine that the SRS port subset is invalid.**

The terminal may transmit SRS in a portion of the invalid SRS port subset. Alternatively, the terminal may transmit SRS in the invalid SRS port subset. The terminal may perform aperiodic SRS transmission in the invalid SRS port subset. The terminal may perform aperiodic SRS transmission in a valid SRS port subset, and may drop aperiodic SRS transmission in the invalid SRS port subset.

If the entire SRS port subset is valid, the terminal may perform aperiodic SRS transmission in SRS resources for the SRS port subset. If a part of the SRS port subset is invalid, the terminal may not perform aperiodic SRS transmission in an invalid slot (e.g., SRS resources) of the SRS port subset. The base station may indicate the terminal to transmit SRS in an available slot through signaling (e.g., RRC signaling). In this case, the terminal may determine whether SRS resources are valid in the next slot.

The terminal may receive an indication of a repetition factor (R) from the base station for UL beam refinement. The above operation may be one step in a UL beam management procedure. If the terminal repeatedly transmits an SRS using the same Tx beam, the base station may perform a hypothesis testing to determine an Rx beam. Frequency hopping of SRS may be performed according to technical specifications.

Frequency hopping may not be performed in SRS resource(s), and SRS may be transmitted for UL beam management purposes. In this case, if a duplex type changes, it may be difficult for the base station to measure reference signal received power (RSRP) based on the same condition. The terminal may not transmit SRS in some of the SRS resources.

Aperiodic SRS transmission may be considered. The base station may indicate the terminal to perform aperiodic SRS transmission in Ns consecutive symbols through signaling (e.g., RRC signaling). The terminal may identify the indication from the base station and operate based on the indication. The base station may indicate the terminal to perform intra-slot frequency hopping through signaling (e.g., RRC signaling). The terminal may identify the indication from the base station and operate based on the indication. Ns may be one of 2, 4, 8, 10, 12, or 14. The base station may indicate 'repetition factor R = 1' to the terminal through signaling (e.g., RRC signaling).

A BWP may be divided into Ns subbands. Ns subbands may have the same size. The terminal may transmit SRS over the entire band of the BWP in Ns symbols. When Ns≥4 and R≥2 are indicated, Ns may be indicated as a number divisible by R. The terminal may transmit SRS in the entire band of BWP using Ns/R subbands with the same bandwidth in R adjacent symbols.

Periodic SRS transmission or semi-static SRS transmission may be considered. When Ns = 1 is indicated, the base station may indicate the terminal to performs inter-slot frequency hopping through signaling. When Ns=2, 4, 8, 10, 12, or 14 is indicated, the base station may indicate the terminal to perform periodic SRS transmission or semi-static SRS transmission and to perform inter-slot frequency hopping or intra-slot frequency hopping through signaling.

When Ns=R is indicated, the terminal may perform inter-slot frequency hopping and transmit SRS using the same frequency resource in R adjacent symbols. Operations related to SD symbols may be further considered. The terminal may not perform frequency hopping in R SRS symbols, and may transmit SRS through the entire band of the BWP in Ns SRS symbols by performing frequency hopping. In this case, if a duplex type changes, a portion of an SRS symbol subset may deviate from a UL subband. The portion of the SRS symbol subset, which deviates from the UL subband, may be determined to be invalid.

**In a proposed method, validity of an SRS resource may be determined on an SRS symbol subset basis.** The terminal may determine the validity of the SRS resource on an SRS symbol subset basis, and may drop SRS transmission in a subset (e.g., SRS symbol subset) determined to be invalid.

**In another proposed method, validity of an SRS resource may be determined on an SRS resource symbol basis. The terminal may drop SRS transmission in an SRS symbol determined to be invalid.**

**In another proposed method, if all subsets of an SRS resource are valid, the terminal may determine that the SRS resource is valid.** The terminal may drop SRS transmission in an SRS resource determined to be invalid. The dropped SRS transmission may be performed in the next slot according to configuration indicated to the terminal.

The SRS transmission may be performed for a purpose of antenna switching. If the use of the SRS resource set is indicated as antenna switching, the base station may receive the terminal's SRS in an SRS resource set (e.g., SRS resources belonging to the SRS resource set) to obtain DL channel state information (CSI).

When xTyR is indicated or configured, simultaneous transmissions may be performed in x ports and simultaneous receptions may be performed in y ports. xTyR may be expressed as 1T2R, 1T4R, 2T4R, 2T2R, or the like. When SRS transmission is repeated an integer number of times in x ports, an SRS reception operation may be performed in y ports.

When xTyR is indicated or configured, the terminal may require a separate processing time for antenna switching. When an SRS port for SRS transmission of the terminal is changed or when an SRS resource is changed, at least one symbol between SRS symbols may be allocated as a gap symbol. To perform SRS transmission in two SRS symbols, the terminal may assume an order of 'SRS symbol-gap symbol-SRS symbol', and perform SRS transmission based on the assumption.

Each value of x and y for 'xTyR' may be determined depending on a form of the terminal. Time resources (e.g., SRS symbols) in which SRS is transmitted may vary depending on configuration of the SRS resource set.

In case of 1T2R, one or two sets of SRS resources may be indicated, and semi-static SRS transmission may be considered. Zero or one SRS resource set may be indicated, and periodic SRS transmission may be considered. If the SRS resource sets are indicated by different resource types (e.g., periodic, semi-static), the two semi-static SRS resource sets may not be activated at the same time. Two SRS resources belonging to one SRS resource set may have different symbols. Different SRS resource sets may have different SRS ports.

In case of 2T4R, one or two SRS resource sets may be indicated. SRS transmission may be performed in two SRS resources (e.g., at different symbols) belonging to one SRS resource set. Each of SRS resources belonging to one SRS resource set may have two SRS ports. Different SRS resources may have a pair of SRS ports that do not overlap each other.

In case of 1T4R, zero or one SRS resource set may be indicated. The resource type of the SRS resource set may be indicated as periodic or semi-static. One SRS resource set may include four SRS resources. SRS resources may be different symbols. SRS ports of SRS resources may correspond to different antenna ports (e.g., different DL DM-RS ports).

In case of 1T4R, zero or two SRS resource sets may be indicated. The resource type of the SRS resource set may be indicated aperiodically. Each of the SRS resource sets may include four SRS resources, and SRS transmission may be performed in different symbols within two slots. The SRS ports of SRS resources within two slots may correspond to different antenna ports (e.g., different DL DM-RS ports). Each of the two SRS resource sets may include two SRS resources. Alternatively, one SRS resource set may include one SRS resource, and another SRS resource set may include three SRS resources.

In case of 1T2R, 2T2R, 4T4R, or 8T8R, zero, one, or two SRS resource sets may be indicated. The number of SRS ports for an SRS resource may be 1, 2, or 4.

The above-described exemplary embodiment may be interpreted as an operation of the terminal. Two or more SRS resource sets may be considered in two or more slots. A reason why the above-described situation occurs is because locations of symbols that can be configured as an SRS resource in one slot are limited, and a gap symbol is required between SRS symbols. Considering SD symbols and non-SD symbols, SRS transmission according to SRS ports may be performed in invalid symbols.

Two or more SRS resource sets may be considered in one slot. Since the SRS resource set may include independent SRS resources, considering SD symbols and non-SD symbols, SRS transmission may be performed in an invalid frequency resource outside the UL subband. In other words, the SRS resources may be invalid.

**In a proposed method, SRS transmission may be dropped in invalid time resources and/or frequency resources.**

In another proposed method, for SRS transmission in SRS resources including SD symbols and non-SD symbols, the base station may apply separate Rx hypothesis or Rx processing. Channel estimation for a case where SRS transmission for SRS ports is performed in SD symbols and channel estimation for a case where SRS transmission for SRS ports is performed in non-SD symbols may be managed differently.

Aperiodic SRS transmission may be performed in SRS resources (e.g., valid time and/or frequency resources) belonging to a triggered SRS resource set. The valid resource may be determined based on each of the methods described above. Alternatively, the valid resource may be determined based on a combination of the methods described above. To determine an available slot, the terminal may find slot(s) in which all SRS resources of all SRS resource sets are valid.

### 2.3 DM-RS bundling for DL joint channel estimation

DL joint channel estimation may be performed. It may be preferable to maintain power consistency/phase continuity for a predefined period of time at the base station. The terminal may perform joint channel estimation on a DL signal/channel received from the base station during a predefined time.

A reception resources for the DL signal/channel may be classified into at least two types. As the first type of reception resource of the DL signal/channel, the reception resource of the DL signal/channel may include both non-SD symbols and SD symbols. The above situation may be interpreted as a case where the exemplary embodiment of FIG. 5 is applied to a reception operation of the DL signal/channel. As the second type of reception resource of the DL signal/channel, the reception resource of the DL signal/channel may include only non-SD symbols (e.g., DL symbols or FL symbols). The above situation may be interpreted as a case where the exemplary embodiment of FIG. 6 is applied to a reception operation of the DL signal/channel. The methods below may be applied to both types of reception resource of the DL signal/channel. Alternatively, the methods below may be applied to one of the two types of reception resource of the DL signal/channel.

**In a proposed method, the base station may indicate the terminal to perform joint channel estimation for the DL signal/channel through signaling (e.g., RRC signaling). The terminal may perform joint channel estimation for the DL signal/channel based on the indication from the base station.** For example, the base station may transmit an indication to enable or disable joint channel estimation for the DL signal/channel to the terminal. When joint channel estimation for the DL signal/channel is enabled, the terminal may perform joint channel estimation for the DL signal/channel. When joint channel estimation for the DL signal/channel is disabled, the terminal may not perform joint channel estimation for the DL signal/channel.

**In another proposed method, the terminal may assume that power consistency/phase continuity for the DL signal/channel scheduled by the base station is maintained.**

When the DL signal/channel is repeatedly received, the terminal may assume that power consistency/phase continuity is maintained while all repetitions of the DL signal/channel are received. In the NR communication system, the terminal may receive a PDSCH in multiple slots. The base station may indicate *pdsch-AggregationFactor* to the terminal through signaling (e.g., RRC signaling). Alternatively, the base station may transmit scheduling information including a time domain resource assignment (TDRA) index indicating *repetitionNumber* to the terminal. To repeatedly receive the DL signal/channel K times, K slots may be required.

According to the technical specifications, in order to receive each of PDSCHs, the terminal may perform independent channel estimation. According to a proposed method, a PDSCH DM-RS belonging to one slot may be used for channel estimation for decoding a PDSCH belonging to another slot. A PDSCH DM-RS may be a DM-RS for decoding/demodulation of a PDSCH.

In a proposed method, the terminal report UE capability information including information on the maximum length of a TDW supported by the terminal to the base station. The base station may receive the UE capability information from the terminal, and identify the maximum length of TDW supported by the terminal based on the UE capability information. The base station may indicate information on the length of a TDW (e.g., nominal TDW) to the terminal through signaling (e.g., RRC signaling). The terminal may identify the length of the TDW (e.g., nominal TDW) indicated by the base station.

### 2.4 DL signals/channels allowed to be received in SD symbols

The terminal may receive a tracking reference signal (TRS) from the base station, and perform DL maintenance (e.g., time synchronization and/or frequency synchronization) based on the TRS. The TRS may be interpreted as a type of CSI-RS. The terminal may receive the TRS in one slot or adjacent slots depending on configuration by the base station. The terminal receive the TRS in two TRS symbols within one slot. Alternatively, the terminal may receive the TRS in two TRS symbols in each of adjacent slots. When the adjacent slots are 2 slots, the TRS may be received in 4 TRS symbols. The TRS symbol may be a symbol configured for TRS transmission and reception.

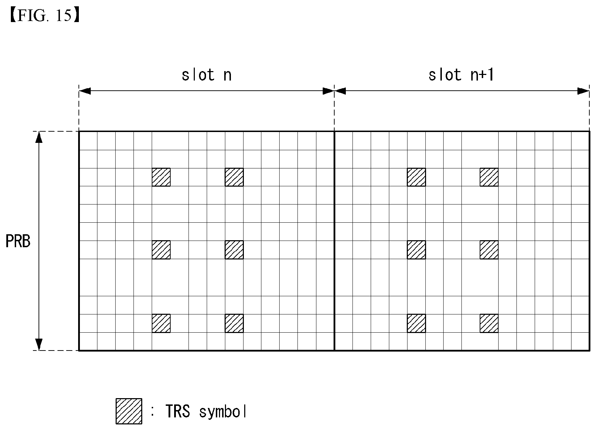

FIG. 15 is a conceptual diagram illustrating a first exemplary embodiment of TRS symbols.

Referring to FIG. 15, TRS symbols in one slot may have a specific interval (e.g., four OFDM symbols). TRS symbols belonging to SD symbols and TRS symbols belonging to non-SD symbols may experience different radio channels. The terminal may not be able to use the TRS to derive time synchronization and/or frequency synchronization. This is because different virtualizations may be applied to TRSs (e.g., TRS symbols). In this case, the TRS symbols (e.g., TRSs) may have different energy per resource element (EPREs). The TRS symbols (e.g., TRSs) may have different transmission configuration indicator (TCI) states (e.g., qcl-typeD).

**In a proposed method, the terminal may perform DL maintenance based on TRS symbols belonging to symbols with the same duplex type (e.g., SD symbols or non-SD symbols).** When one of two TRS symbols belongs to SD symbols and the other TRS symbol belongs to non-SD symbols, the terminal may not use the two TRS symbols for DL maintenance.

**In a proposed method, the terminal may determine validity in units of a slot including TRS symbols.** A first slot including only SD symbols and a second slot including only non-SD symbols may be indicated to the terminal, and the first slot and the second slot may be adjacent slots. The two slots may include TRS symbols, and the TRS symbol(s) in each of the two slots may be determined to be valid. The terminal may separately process the TRS symbols in each slot and perform DL maintenance based on the TRS symbols.

The base station may indicate to the terminal through signaling (e.g., RRC signaling) that TRSs are transmitted in two adjacent slots. The terminal may identify the indication from the base station. When TRSs are received in two adjacent slots, the terminal may perform DL maintenance in units of each slot or in units of two slots. When DL maintenance is performed in units of each slot, the terminal can perform DL maintenance for SD symbols and DL maintenance for non-SD symbols separately.

When TRSs are received in two slots and both slots are determined to be valid, the terminal may perform DL maintenance based on the TRSs received in the two slots. When TRSs are received in two slots, and at least one slot of the two slots is determined to be invalid, the terminal may not use the TRSs received in the two slots for DL maintenance.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a terminal, comprising:
receiving, from a base station, information indicating to perform uplink (UL) transmission; and
performing the UL transmission in a resource region including subband full duplex (SBFD) symbol(s) and non-SBFD symbol(s),
wherein at least one of downlink (DL) communication or UL communication is able to be performed in the SBFD symbol(s), and only one of the DL communication or the UL communication is able to be performed in the non-SBFD symbol(s).

2. The method according to claim 1, wherein when the UL transmission is performed, the terminal considers that an event occurs in which coherence for the UL transmission is not maintained in the resource region.

3. The method according to claim 2, wherein the terminal maintains coherence for the UL transmission in a time domain window (TDW) before the event, according to an indication from the base station.

4. The method according to claim 1, wherein when an event occurs in the resource region in which coherence for the UL transmission is not maintained, the terminal maintains coherence for the UL transmission in a TDW after the event.

5. The method according to claim 4, wherein the TDW is configured based on at least one of capability of the terminal or an indication from the base station.

6. The method according to claim 1, wherein the terminal maintains power consistency and phase continuity for communication in the SBFD symbol(s) and the non-SBFD symbol(s).

7. The method according to claim 1, wherein the information indicating to perform the UL transmission indicates a physical uplink shared channel (PUSCH) repetition type A or PUSCH repetition type B.

8. The method according to claim 1, wherein when the UL transmission is performed based on a PUSCH repetition type A, a slot in which the UL transmission is dropped is not considered as an available slot.

9. The method according to claim 1, wherein when the UL transmission is performed based on a PUSCH repetition type B, a split instance is generated at a boundary between the SBFD symbol(s) and the non-SBFD symbol(s).

10. The method according to claim 1, wherein one or more symbols before a boundary between the SBFD symbol(s) and the non-SBFD symbol(s) or one or more symbols after the boundary are configured as one or more gap symbols.

11. The method according to claim 1, wherein the UL transmission is a sounding reference signal (SRS) transmission, and validity of an SRS resource in which the SRS transmission is performed is determined at a boundary between the SBFD symbol(s) and the non-SBFD symbol(s) on a symbol, symbol subset, or port subset basis.

12. The method according to claim 1, wherein the UL transmission is an SRS transmission, and validity of an SRS resource in which the SRS transmission is performed is determined in units of the SRS resource.

13. A terminal comprising at least one processor, wherein the at least one processor causes the terminal to perform:
receiving, from a base station, information indicating to perform uplink (UL) transmission; and
performing the UL transmission in a resource region including subband full duplex (SBFD) symbol(s) and non-SBFD symbol(s),
wherein at least one of downlink (DL) communication or UL communication is able to be performed in the SBFD symbol(s), and only one of the DL communication or the UL communication is able to be performed in the non-SBFD symbol(s).

14. The terminal according to claim 13, wherein when the UL transmission is performed, the terminal considers that an event occurs in which coherence for the UL transmission is not maintained in the resource region.

15. The terminal according to claim 13, wherein when an event occurs in the resource region in which coherence for the UL transmission is not maintained, the terminal maintains coherence for the UL transmission in a time domain window (TDW) after the event.

16. The terminal according to claim 15, wherein the TDW is configured based on at least one of capability of the terminal or an indication from the base station.

17. The terminal according to claim 13, wherein when the UL transmission is performed based on a physical uplink shared channel (PUSCH) repetition type A, a slot in which the UL transmission is dropped is not considered as an available slot.

18. The terminal according to claim 13, wherein when the UL transmission is performed based on a PUSCH repetition type B, a split instance is generated at a boundary between the SBFD symbol(s) and the non-SBFD symbol(s).

19. The terminal according to claim 13, wherein one or more symbols before a boundary between the SBFD symbol(s) and the non-SBFD symbol(s) or one or more symbols after the boundary are configured as one or more gap symbols.

20. The terminal according to claim 13, wherein the UL transmission is a sounding reference signal (SRS) transmission, and validity of an SRS resource in which the SRS transmission is performed is determined at a boundary between the SBFD symbol(s) and the non-SBFD symbol(s) on a symbol, symbol subset, or port subset basis.
